# EUROPEAN PATENT SPECIFICATION

(11) **EP 1 788 465 B1**
(45) Date of publication and mention of the grant of the patent: **02.04.2014**
(21) Application number: 06255485.2
(22) Date of filing: 25.10.2006
(51) Int. Cl.: G05B 19/05

(54) **Machine signal processing device**
Vorrichtung zur Maschinensignalverarbeitung
Dispositif de traitement d'un signal de machine

(30) Priority: 17.11.2005 JP 2005333124
(43) Date of publication of application: 23.05.2007
(73) Proprietor: FANUC CORPORATION, Oshino-mura Minamitsuru-gun Yamanashi 401-0597 (JP)
(72) Inventor: Saito, Osamu, Oshino-mura,Minamitsuru-gun Yamanashi 4010511 (JP); Araki, Kenji, Oshino-mura,Minamitsuru-gun Yamanashi 4010511 (JP); Watanabe, Hiroshi, Fujiyoshida-shi Yamanashi 403-0004 (JP)
(74) Representative: Haseltine Lake LLP

(56) References cited:
- FR-A- 2 826 746
- JP-A- 8 221 107
- JP-A- 9 128 014
- US-A1- 2004 194 101

## Description

### BACKGROUND OF THE INVENTION

### 1. Field of the Invention

The present invention relates to a signal processing device for various machines.

### 2. Description of the Related Art

In order to allow peripheral devices and so forth which are arranged for various machines to be operated in accordance with the operating states of the machines, signals constituting a predetermined logic operation result have hitherto been output with predetermined timing. For example, in the case of an injection molding machine, signals may be output in the metering process during a fully automatic operation or a semiautomatic operation of the injection molding machine as signals that allow a volumetric feeder for supplying resin to the injection molding machine to operate. In this case, a [(fully automatic operation in progress) OR (semiautomatic operation in progress) ] AND (metering in progress) signal may be output.

The volumetric feeder signal given by way of example has straight forward timing and is used in logic operations so that it can be used as a 'metering in progress signal for when a fully automatic operation or semiautomatic operation is underway' for peripheral devices as well as a volumetric feeder. Because of general versatility of such signals, there are many cases where these signals are provided in an injection molding machine from the beginning. However, because there are restrictions on the number of signals that the injection molding machine can be provided with, it is not possible to handle all the signals that can be assumed.

Hence, in a case where signals that cannot be provided as general-purpose signals are output to the injection molding machine, there is the problem that it is necessary for the manufacturer of the injection molding machine to modify the control program and, as a result, it takes time for the demands of the user to be met.

Therefore, in order to rapidly meet the demands of the user, an injection molding machine that is constituted to allow the user to create a program and to permit the execution of a user-created program and a standard program is known (Japanese Patent Application Laid Open No. 8-132505).

In addition, technology aimed at simplifying the program creation work each time a program is created is known. For example, a method of creating a sequence program by converting a timing chart into a sequence program (See Japanese Patent Application Laid Open No. 4-145501), a programming device with which signal relations are entered in a table format and which automatically generates a ladder program from the table (Japanese Patent Application Laid Open No. 6-4111), a device that describes a logic circuit in a table format and converts the table-format logic circuit into functional language (See Japanese Patent Application Laid Open No. 6-149311), a sequence control method that generates a function to describe the relationship between the input and output at respective points from line diagram information of an operation chart or time chart or the like (Japanese Patent Application Laid Open No. 11-202912), and a molding cycle setting device that allocates an operating command item to each operating sequence of the injection molding machine (See Japanese Patent Application Laid Open No. 2003-225925) are known.

However, because the logic circuit and timing chart and so forth must be investigated even when using the respective technologies above, the creation of the sequence program is still a burden for the user.

Further, the manufacturer must add complex processing inside the sequence-program automatic generation device in order to prevent the machine from performing an erroneous operation when executing a program that was created by the user.

On the other hand, a technology aimed at allowing the user to modify the operation timing of an operating device in the respective steps is known. For example, Japanese Patent Application Laid Open No. H5-181514 discloses a technology that supplies 2ⁿ numeric values to the respective operating devices, selects one or a plurality of operating devices that are made to operate in the respective work steps, adds the 2ⁿ numeric values that correspond with the selected operating device, and, by setting the added values, allows the operating devices required in the respective work processes to operate.

However, although the devices that operate in the respective work steps can be chosen, signals of the desired logic and timing cannot be obtained.

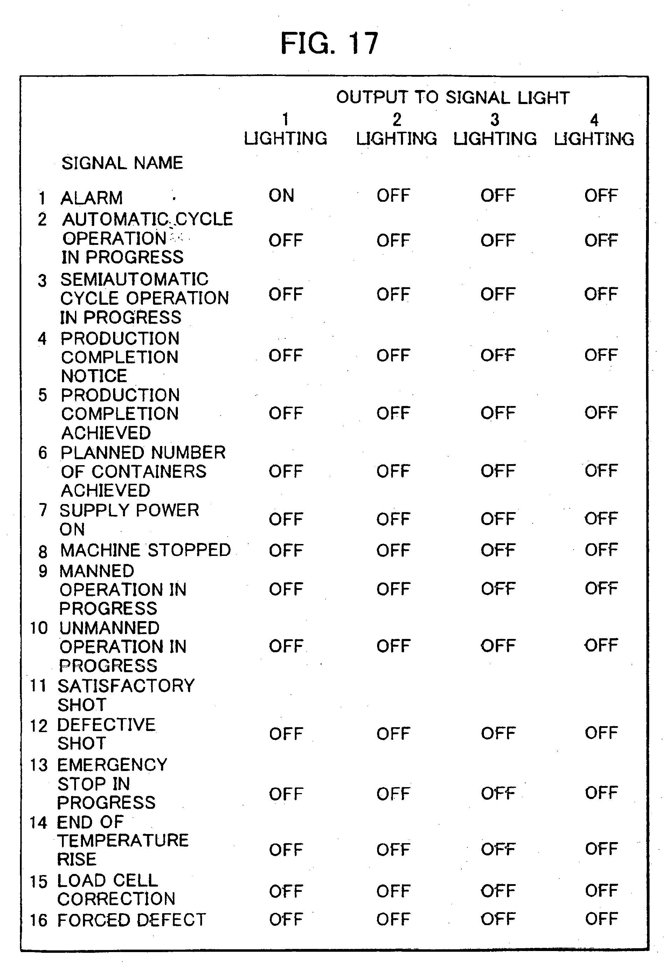

Furthermore, as shown in Fig. 17, where the settings and so forth for the signal light are concerned, a setting method that performs ON/OFF setting for each signal and outputs the OR of a plurality of signals set to ON is known. For example, for turning on the signal light 1 when an alarm is produced in an injection molding machine, 'ALARM' in the signal light 1 is set to 'ON'. Further, if 'ALARM' and 'EMERGENCY STOP IN PROGRESS' in the signal light 1 are set to 'ON', then the signal light 1 lights up during an alarm or emergency stop. That is, a logical addition of the alarm and the emergency stop is set in the signal light 1. For tuning on the signal light 2 as a signal indicating that an automatic cycle operation is in progress, 'AUTOMATIC CYCLE OPERATION IN PORGRESS' is set to 'ON' . Further, for turning on the signal light 1 and the signal light 2 when a defective shot is produced, 'DEFECTIVE SHOT' of the signal light 1 and the signal light 2 is set to 'ON'. In this manner, 'ON' is set for signal lights that are to be lit for the respective signal names.

In such a setting method in which ON/OFF setting is made for each signal light to be lit for each signal name, if the types of signals increase, the items necessary for ON/OFF setting increases, with the result that larger display area is required on a display screen and it becomes more difficult to confirm the content of the signals.

Generally, the content of the signals output to the peripheral devices of a machine such as a signal light is diverse for the users using the machine and is not fixed according to the machine but rather varies depending on the system that comprises the machine and the peripheral devices thereof. However, the logic for generating the signals output to the peripheral devices is often simple. Signals can often be generated by means of a simple logic operation such as an OR or AND operation, for example, for signals which are produced when the machine assumes a certain specified state, signals that are produced when a certain event occurs in the machine when the machine assumes a certain specified state, and so forth.

FR 2826746 discloses a method of starting coherent, synchronized, determinist automatic operating programs via real time graphs using a first language (LD) representing logic relays and current sensors and a second language FBD representing both logic and analogue electronic functions. The method includes the construction on the same information graph of functions in normalized LD representation form (current relays, with contacts and control and detection windings) and functions in normalized FBD representation (electronic functions and voltage levels on connections).

JP 8221107 discloses that an input screen is displayed during the generating process of the sequence control program. In the input screen, an operation process field, an output pin board field, and a progress condition field are constituted in one line by operation processes, and plural operation processes are listed. The input of indications for respective fields constituting the input screen and data corresponding to the respective fields is accepted. According to the contents of the inputted data, the control program is generated in PC user language. Consequently, the data necessary for the generation of the control program can be set and inputted directly from an operation flow to be controlled.

The present invention relates to a machine signal processing device comprising a display device, an input device and a controller for controlling a machine, wherein the display device is arranged to display a predefined group of signals and a plurality of groups of signal setting fields for setting the output conditions of a selected signal, each of the groups comprising a plurality of signal setting fields for setting selected signals; the input device comprises means for selecting and setting a signal from among the predefined group of signals displayed on the display device; and means for setting an output destination, of the result of logic operation; and the controller comprises logic operation execution means for performing logic operations, wherein the logic operation execution means is arranged to carry out, based on the signals set in the signal setting fields, an operation of logical addition on the signals set in the signal setting fields of the same group, if one or more signals are set in another group of signals setting fields, to carry out an operation of logical multiplication on the results of logical addition operation performed on the respective groups of signal setting fields, and to output the result of the logic operation to the set output destination. With this configuration, the timing for outputting signals can be set easily.

The content of the logic operation displayed on the display device may be specified by the group of signal setting fields comprising a plurality of signal setting fields that allow the input device to supply signals to the logic operation execution means, and by the display positions of the signal setting fields where signal setting fields of the same group are arranged vertically while the groups of signal setting fields are arranged horizontally side-by-side. Further, the content of the logic operation may be such that an operation of logical addition is carried out on the signals set in the signal setting fields in the same group and an operation of logical multiplication is carried out on the results of logical addition operations carried out on the respective groups of signal setting fields.

The signal processing device of the machine according to the present invention has the above constitution and therefore allows a user to change the output timing of an output signal by selecting a familiar signal name, facilitates changes to the conditions for outputting the output signals, and allows output signals that cause peripheral devices to operate to be easily customized.

The above objects and characteristics of the present invention as well as further objects and characteristics thereof will become more apparent from the subsequent description of the embodiments with reference to the attached drawings, of which:
Fig. 1 shows an example in which the present invention is applied to a signal processing device of an injection molding machine in a first embodiment of the present invention by means of a block diagram of essential parts;
Fig. 2 shows an example of a setting screen for setting the timing with which an output signal is output, in the signal processing device (display device) of Fig. 1;
Fig. 3 shows one example of a screen that displays a group of signals, in the signal processing device (display device) of Fig. 1;
Fig. 4 shows another example of a setting screen for setting the timing with which a signal is output, in the signal processing device (display device) of Fig. 1;
Fig. 5 shows another example of a screen that displays a signal group, in the signal processing device (display device) of Fig. 1;
Fig. 6 shows another example of setting screen which is different from the setting screen shown in Fig. 2 or 4 where logic operation is carried out;
Fig. 7 is a flowchart that shows operating procedure processing for output signal setting processing that employs the signal processing device (display device) of Fig. 1;
Fig. 8 is an explanatory diagram of an output signal table of the signal processing device (RAM) in Fig. 1;
Fig. 9 is a flowchart of logic operation processing of a first logical addition in the output signal control processing that is executed by the sequence program stored in the signal processing device (nonvolatile RAM 4) in Fig. 1;
Fig. 10 is a ladder diagram in which logic operation processing of the first logical addition shown in Fig. 9 is shown;
Fig. 11 is an explanatory diagram of an output signal table, as substitute for the output table shown in Fig. 8, in case where signal reference destination of the injection molding machine is directly updated;
Fig. 12 is a flowchart of logic operation processing of logical addition in which the signal reference destination of the injection molding machine is directly updated;
Fig. 13 is a ladder diagram of the logic operation processing of a first logical addition in which the signal reference destination of the injection molding machine is directly updated;
Fig. 14 is a flowchart of logic operation processing of a second logical addition in the output signal control processing that is executed by the sequence program stored in the signal processing device (nonvolatile RAM 4) in Fig. 1;
Fig. 15 shows a ladder diagram in which logic operation processing of the second logical addition shown in Fig. 14 is shown;
Fig. 16 is a ladder diagram that shows operation of logical multiplication to be carried out based on the output of the first logical addition and the output of the second logical addition, in the signal processing shown in Fig. 1; and
Fig. 17 is an example of a screen for setting the output signal by means of the prior art.

### DETAILED DESCRIPTION OF THE PREFERRED EMBODIMENTS

An example in which the present invention is applied to a signal processing device of an injection molding machine will be described hereinbelow as the first embodiment of the present invention.

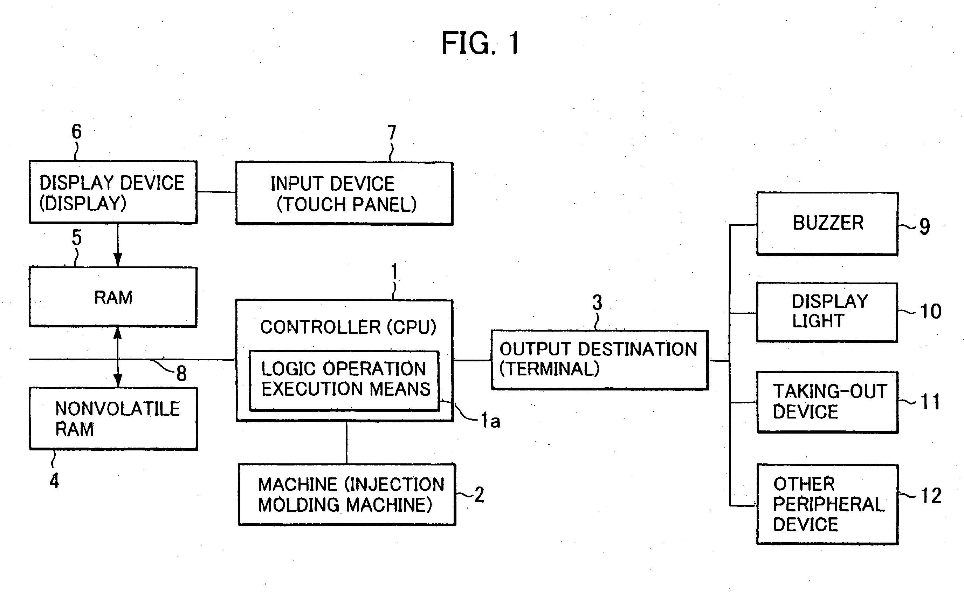

Fig. 1 is a block diagram of essential parts that illustrates the first embodiment of the signal processing device of the machine according to the present invention. Logic operation execution means is provided in the controller that controls the machine (injection molding machine) and the signal processing device is constituted by the controller, the display device that the machine (injection molding machine) comprises and an input device and so forth.

In Fig. 1, reference numeral 1 represents a controller that controls a machine (injection molding machine) 2 and the controller 1 comprises a CPU and also comprises logic operation execution means 1a that carries out a logic operation on the basis of a sequence program that will be described subsequently. A nonvolatile RAM 4 that stores the logic-operation sequence program and a RAM 5 are connected via a bus 8 to the controller 1. The RAM 5 stores output signals and signal output destinations that are input via a display device (display) 6 and an input device (touch panel) 7. The signal processing device is constituted by the controller 1, which comprises the logic operation execution means 1a, the display device 6, the input device 7, the nonvolatile RAM 4 and the RAM 5.

In addition, a buzzer 9, signal light 10, a taking-out device 11 that takes the mold out of the injection molding machine and another peripheral device 12 are connected to a terminal 3 which is provided in the controller 1 and constitutes a peripheral-device output destination.

The signals used by the injection molding machine may be broadly classified as state signals that are repeated in each cycle such as mold closure, injection, dwelling, metering, mold opening, and extrusion, and state signals that arise irrespective of the cycles such as alarm, emergency stop, automatic operation and manual operation and so forth.

Where the majority of the signals that are output to the peripheral devices are concerned, by carrying out operation of logical addition of a few signals among the state signals that are unrelated to the cycles and logical addition of a few signals among the state signals that are repeated for each cycle, a desired output signal can be obtained by carrying out logical multiplication operation on the results of those logical additions. The signals used in the abovementioned volumetric feeder may also be obtained from the logical multiplication operation on [(automatic operation) OR (semiautomatic operation)], logical addition of the state signals unrelated to cycles, and (metering in progress), state signals repeated in each cycle,.

Hence, in this embodiment, a logic circuit is provided which stores a plurality of signals so that logical addition operation is carried out based on those signals and logical multiplication operation is carried out based on the results of those logical addition.

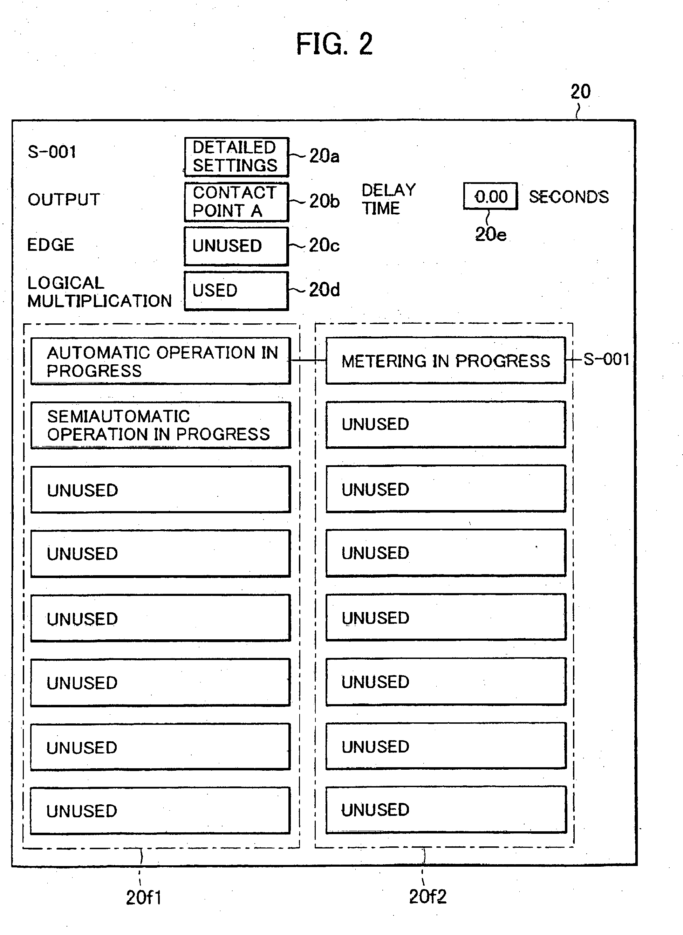

Fig. 2 represents a setting screen 20 of the display device 6 that displays the content of a logic operation of an output signal to establish the timing with which the signal is output and a signal group that is the target of the logic operation. Hence, in the example shown in Fig. 2, an example of a screen for setting the output conditions for a signal 'S-001' is shown and an example in which the logical multiplication of two signals found by means of logical addition operation is taken and the signal 'S-001' is output is shown.

First, in this example, a field 20a for setting types of setting between 'DETAILED SETTINGS' or 'SIMPLE SETTINGS', a field 20b that permits logical addition and logical multiplication operation by setting detailed settings in field 20a and permits the selection of the output method (including whether the output is a contact point A output in which the signal is output as is or a contact point B output in which the signal is output inverted, an edge field 20c for selecting the leading edge/trailing edge in order to output a pulse signal at the leading or trailing edge of the signal thus created; a field 20d for setting whether or not logical multiplication operation is used; and a field 20e for setting the delay time for delaying the output of the signal for the logic operation result are displayed. Moreover, in addition to these, first and second signal setting fields 20f1 and 20f2 for logical addition for setting signals on which logical addition operation is carried out are displayed side by side.

The first signal setting field 20f1 and second signal setting field 20f2 have signal names entered therein in a vertical direction. The logical addition operation on the signals set in the first signal setting field 20f1 is carried out and the logical addition operation on the signals set in the second signal setting field 20f2 are carried out and the logical multiplication operation on the results of the logical addition operations is carried out, whereby the signal 'S-001' is output.

Fig. 2 shows an example in which the logical addition of 'AUTOMATIC OPERATION IN PROGRESS' and 'SEMIAUTOMATIC OPERATION IN PROGRESS' set in the first signal setting field 20f1 is determined and the logical multiplication of this logical addition output and 'METERING IN PROGRESS' set in the second signal set field 20f2 is taken and the result of the logic operation is output as 'S-001', without delay time, at the contact point A.

Further, when 'SIMPLE SETTINGS' is set in the field 20a for setting the types of setting, setting fields 20b, 20c, 20d, and 20e for 'OUTPUT', 'EDGE', 'LOGICAL MULTIPLICATION' and 'DELAY TIME' are not displayed, but the signal setting field 20f1 for only one logical addition is displayed, and the signal obtained by logical addition operation based on signal states of the signal names which are set in the signal setting field 20f1 for logical addition is set as an output signal.

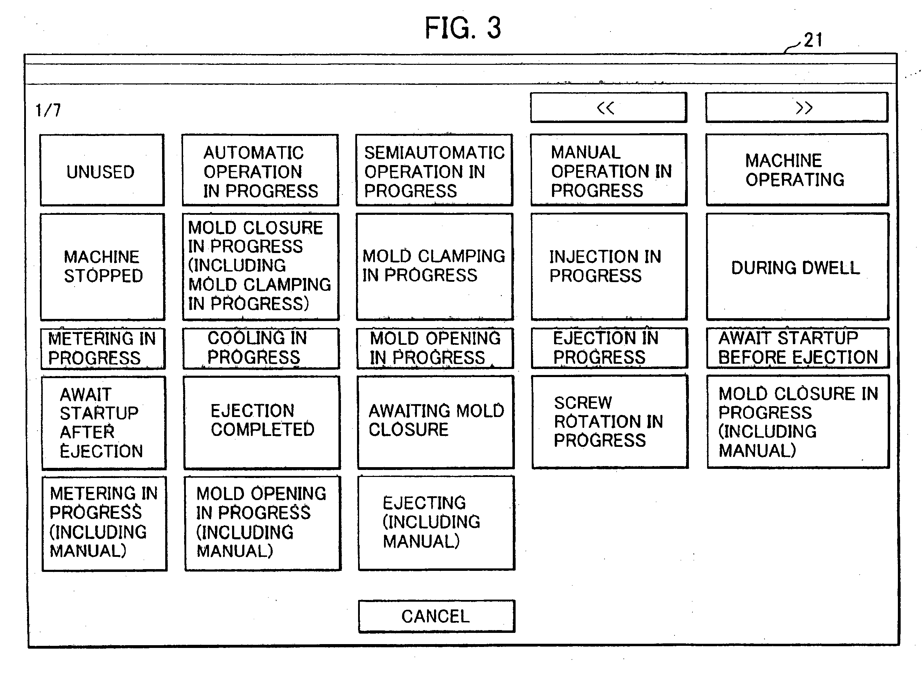

Fig. 3 shows one example of the screen 21 that displays a signal group that is set in the signal setting fields 20f1 and 20f2 for logical addition. This screen 21 shows, in a window format, the state in which the setting screen 20 shown in Fig. 2 is displayed on the screen of the display device 6. When an operator designates either input field of the signal setting fields 20f1 and 20f2 for logical addition and selects one signal from among the signals displayed on the signal group screen 21, setting is made in the signal setting fields 20f1 and 20f2 for logical addition.

Because there is a large quantity of signals, a plurality of screens for displaying the signal group are provided. In the example shown in Fig. 3, an example in which a first screen ("1/7") among the seven screens provided is shown.

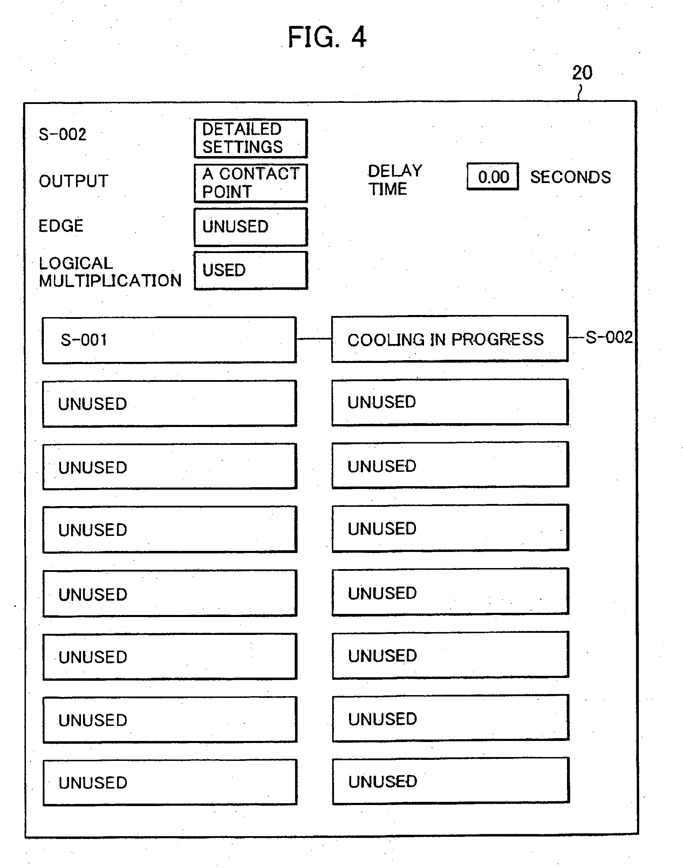

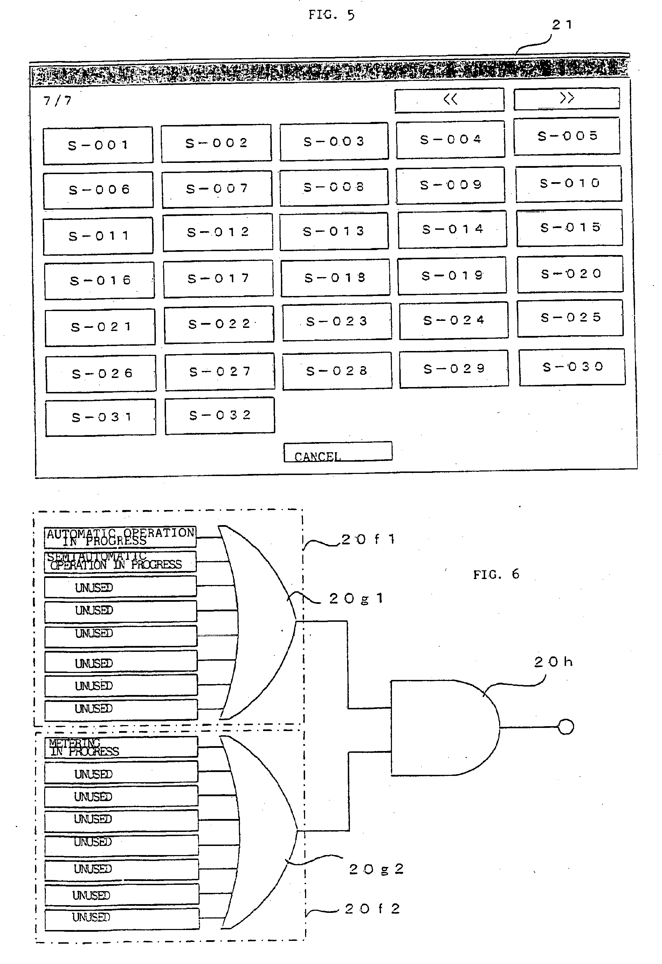

This signal group can include, in addition to signals that express the state of the injection molding machine as shown in Fig. 3, an output signal (S-001 or the like) of logical operation, that is, a signal that is newly created by the user. Fig. 5 shows an example of a screen in which the newly created signals 'S-001' to 'S-032' are displayed. Further, the setting screen 20 of Fig. 4 illustrates an example of settings that obtain output signals through a logic operation by using the created signals.

Further, in the above example, in the setting screen 20, signal setting fields for logical addition in which signals used for logical addition operation are set are arranged in the vertical direction, and setting fields for carrying out logical addition operation are arranged in a horizontal direction, so that the content of the logic operation in which logical multiplication operation is carried out based on the results of logical addition operation is displayed in respective display positions concerned. However, as shown in Fig. 6, the content of the logic operation may also be expressed by a diagrammatical representation 20g of logical addition and a diagrammatical representation 20h of logical multiplication (diagrammatical representation of logical addition and logical multiplication operations is based on MIL).

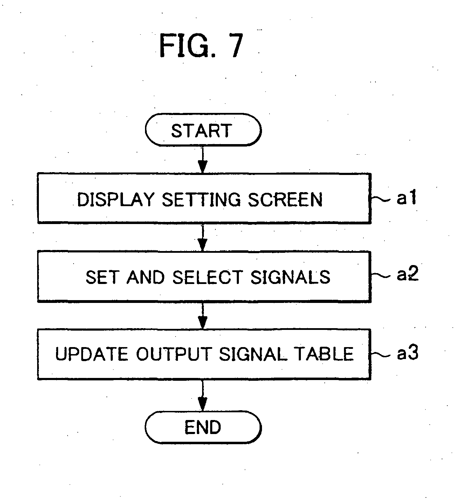

Fig. 7 is a flowchart showing the operating procedure processing for the output signal setting processing.

First, the signal setting screen shown in Fig. 2 is displayed on the display screen of the display device 6 (step la) and the signals for carrying out a logic operation on the output signal are set on the signal setting screen as mentioned earlier (step a2). The CPU of the controller 1 updates the output signal table in the RAM 5 on the basis of the input data (step a3) and ends the output signal setting processing.

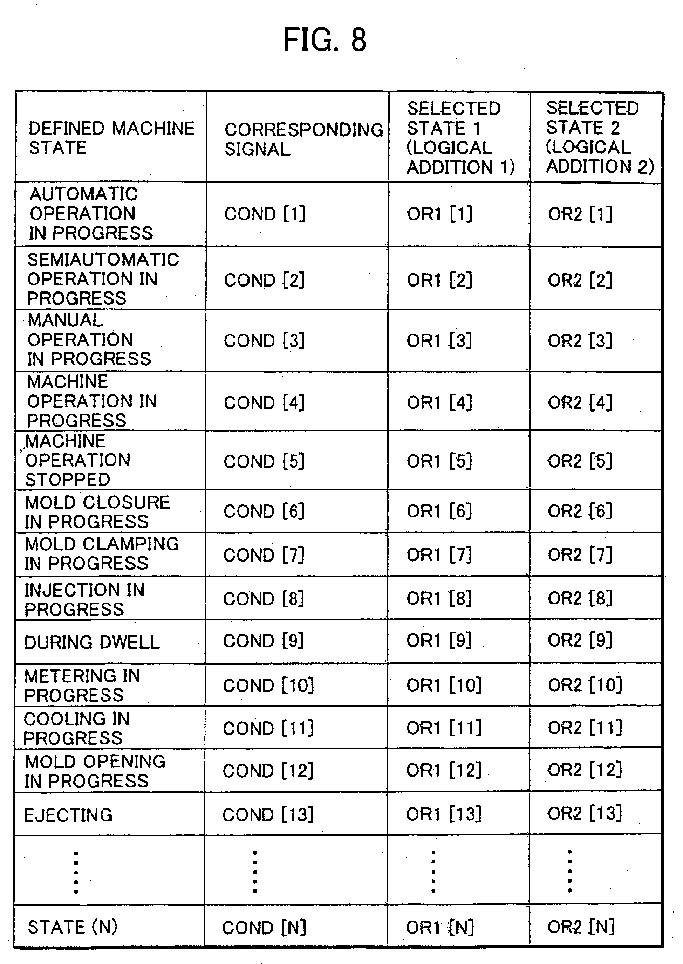

Fig. 8 is an explanatory diagram of the output signal table. COND [n] is a signal that represents a state n (n = 1 to N) of the injection molding machine such as 'AUTOMATIC OPERATION IN PROGRESS', 'SEMIAUTOMATIC OPERATION IN PROGRESS', 'MANUAL OPERATION IN PROGRESS' and so forth, and the signal storage section COND [n] is [ON] when the injection molding machine is in the corresponding state. A storage section OR1 [n] for storing setting of signals on which operation of first logical addition, set via the setting screen, is carried out and a storage section OR2 [n] for storing settings of signals on which operation of second logical addition is carried out are provided in correspondence with the state of the injection molding machine.

In the case of the example of the setting screen shown in Fig. 2, as 'AUTOMATIC OPERATION IN PROGRESS' and 'SEMIAUTOMATIC OPERATION IN PROGRESS' are set in the fields of first logical addition, the storage section OR1[1] and storage section OR1[2] are set 'ON' . Further, as 'METRING IN PROGRESS' is set in the field of second logical addition, the storage section OR2 [10] is set 'ON'. The output signal table is created and updated in the RAM 5 as detailed hereinbelow.

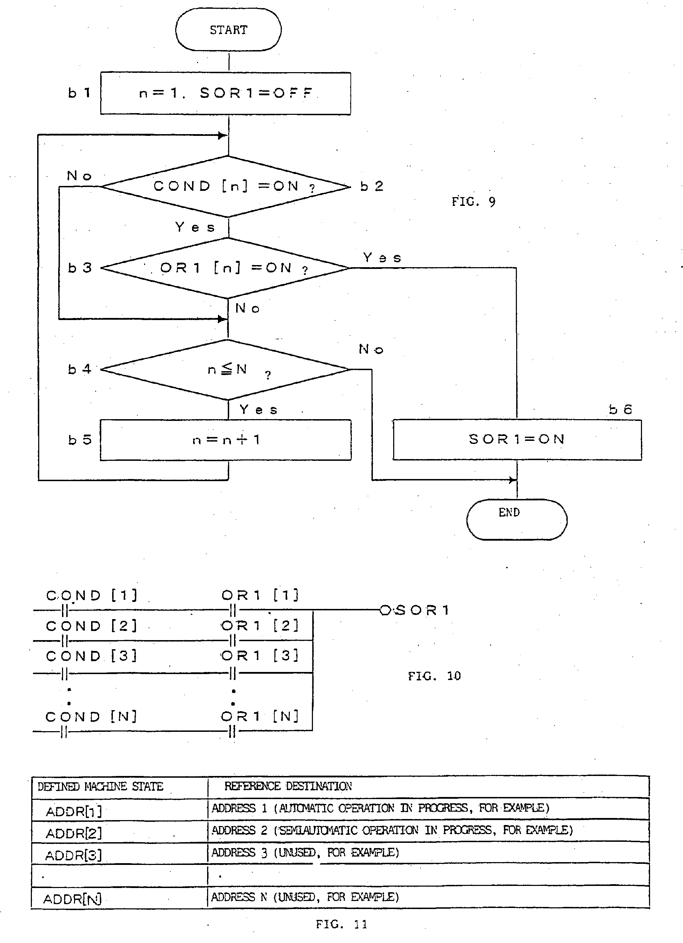

When the output signal table is updated in this way, the CPU of the controller 1 executes output-signal control processing to execute a sequence program that is stored in the nonvolatile memory RAM 4 on the basis of the output signal table. Fig. 9 is a flowchart of the logic operation processing of the first logical addition in the output signal control processing that is performed every predetermined cycle by means of the sequence program.

First, the index n is set to '1' and the signal SOR1 that indicates the operation result of the first logical addition is set to 'OFF' (step b1). Thereafter, it is judged whether the storage section COND [n] that indicates the state of the injection molding machine on the output signal table is 'ON' or not (step b2) and, if the storage section COND [n] is not 'ON', the processing proceeds to step b4 and, if the storage section COND [n] is 'ON', then it is judged whether OR1 [n] is set to 'ON' or not. That is, it is judged whether OR1 [n] is set as a signal on which operation of the first logical addition is to be carried out (step b3). If OR1 [n] has not been set to 'ON' , the processing proceeds to step b4. In step b4, it is judged whether the index n is equal to or less than N which is the number of the states of the injection molding machine and, if the index does not exceed this number N, index n is incremented by one (step b5) and the processing proceeds to step b2.

The processing of steps b2 to step b5 is executed repeatedly hereinbelow. When it is judged that the storage section COND 'n' indicating the state of the injection molding machine is 'ON' in step b2 and that the storage section OR1 'n' has been set to 'ON' for a signal on which operation of the first logical addition is to be carried out in step b3, the processing proceeds to step b6 and 'ON' is set for signal SOR1 that indicates the operation result of the first logical addition and the logic operation processing of the first logical addition is ended. In addition, when there are no cases where the storage section COND [n] and storage section OR1 [n] are both judged to be 'ON' up until the index n exceeds N which is the number of the types of states of the injection molding machine, the processing is terminated with the signal SOR1 kept 'OFF' as has been set in step b1.

When 'AUTOMATIC OPERATION IN PROGRESS' and 'SEMIAUTOMATIC OPERATION IN PROGRESS' have been set as the first logical addition as shown in Fig. 2, the storage section OR1 [1] and the storage section OR1 [2] are set to 'ON'. Hence, when the injection molding machine is in the automatic operation state and the storage section COND [1] is [ON], or when the injection molding machine is in the semiautomatic operation state and the storage section COND [2] is [ON], determinations of steps b2 and b3 are 'Yes' and signal SOR1 is set to 'ON'. That is, when the injection molding machine is in an automatic operation state or semiautomatic operation state, signal SOR1 is in 'ON' state.

Fig. 10 is a ladder diagram in which the sequence program of operation processing of the first logical addition is expressed in a ladder format.

The ladder program shows that if the storage section COND [n] is 'ON' and the storage section OR1 [n] is 'ON', then the signal SOR1, which represents the result of operation of the first logical addition, is 'ON' . It should be noted here that n is any one of 1 to N.

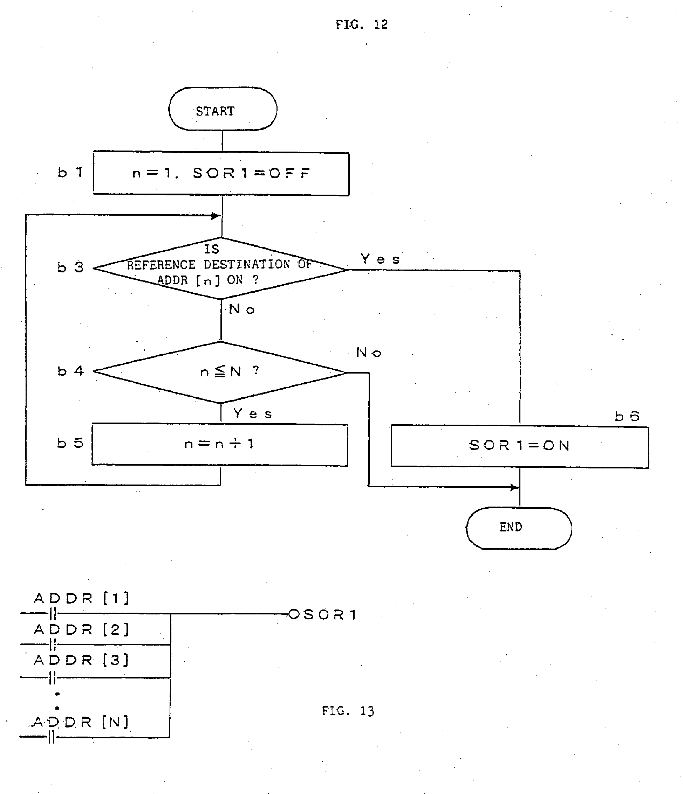

Further, if an output signal table shown in Fig. 11 is provided, instead of the output signal table shown in Fig. 8, and the reference destinations of the storage sections ADDR [1] to ADDR [N] of the output signal table shown in Fig. 11 are directly updated in the output signal setting processing, then the same processing can also be executed without using the storage section OR1 [n]. The output signal table shown in Fig. 11 shows setting examples of ADDR [1] to ADDR [N] for acquiring machine states from defined reference destinations and the reference destinations. A reference destination is defined in ADDR [n] and the reference destination is updated when the signal is set. Fig. 12 is a flowchart for acquiring signal SOR1 from a signal state to which ADDR [n] refers. Fig. 13 is a sequence program of a ladder diagram as indicated by the method for updating the reference destinations.

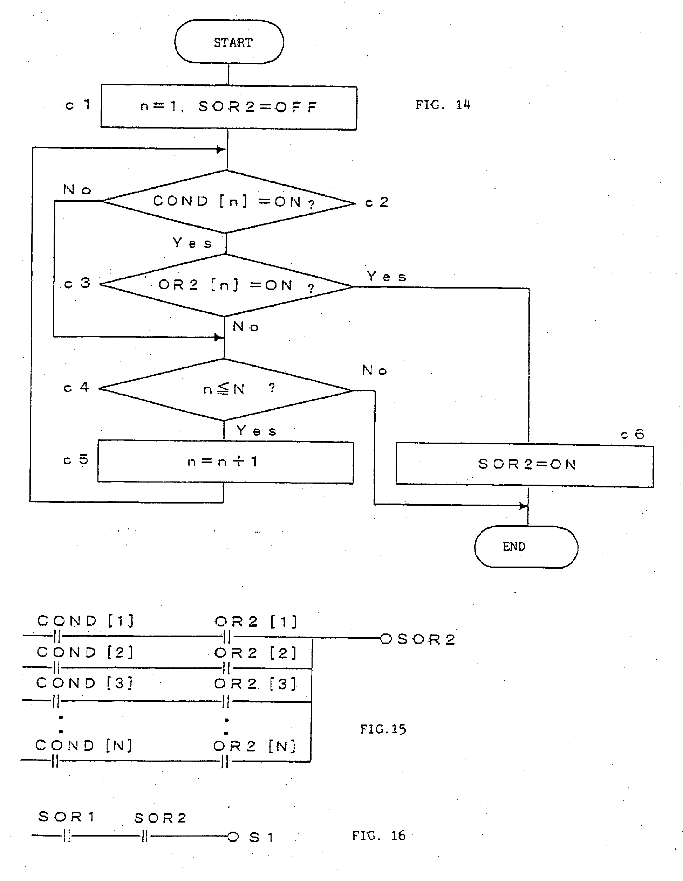

Fig. 14 is a flowchart of the operation processing of the second logical addition to be carried out by means of the sequence program stored in the nonvolatile RAM 4. The processing is the same as that shown in the flowchart of Fig. 9 where the operation processing of the first logical addition is carried out. Steps b1 to b6 in Fig. 9 correspond with steps c1 to c6 of the flowchart in Fig. 14, the difference being that the storage section OR1 [n] is changed to storage section OR2 [n] in steps b3 and c3 and signal SOR1 is changed to SOR2 in steps b1 and b6 and c1 and c6. That is, when the storage section COND [n] is 'ON' and storage section OR2 [n], signal SOR2, which is the result of operation of the second logical addition, is output as 'ON'.

Furthermore, Fig. 15 shows the sequence program of the second OR operation by means of a ladder diagram. The sequence program processing of operation of the second logical addition shown in Figs. 14 and 15 is the same as the sequence program processing of operation of the first logical addition shown in Figs. 9 and 10, so that detailed description of the former processing is omitted.

Further, the result of logical multiplication operation on the signal SOR1 which indicates the result of operation of the first logical addition and the signal SOR2 which indicates the result of operation of the second logical addition is output as an output signal to the output destination. Fig. 16 is a ladder diagram that indicates operation processing of logical multiplication to be carried out based on the signal SOR1 and the signal SOR2.

In the setting of the output signal S-001 shown in Fig. 2, signal SOR1 is 'ON' for 'AUTOMATIC OPERATION IN PROGRESS' or 'SEMIAUTOMATIC OPERATION IN PROGRESS' , based on the result of operation processing of the first logical addition shown in Figs. 9 and 10, and signal SOR2 is 'ON' for 'METRING IN PROGRESS' , based on the result of operation processing of the second logical addition shown in Figs. 14 and 15. Then, signal S-001 is output based on the result of operation processing of logical multiplication carried out on the signal SOR1 and the signal SOR2 shown in Fig. 16.

As explained above, according to the present invention, a user who used a machine is able to set and change the output timing for an output signal simply by changing a signal to be used in logic operation incorporated in the machine beforehand, so that the user need not change or delete a sequence program.

In addition, by matching the positional relationships of setting fields for selecting a signal with logic operation provided in a sequence program, a user can easily understand in which setting field a signal should be set each time the user carries out desired logic operation. That is, as in the case of the embodiment explained above, if means for carrying out logical addition operation based on the combination of signals set in signal name input fields arranged in a vertical direction and carrying out logical multiplication operation based on the outputs of the result of logical addition set in each of logical addition fields arranged in a horizontal direction is prepared in advance, then a user is able to carry out a simple logic operation by selecting setting fields where an output signal is set.

Naturally, a plurality of signals that the user can create may be prepared.

Although an example in which the present invention is applied to an injection molding machine is given in the above embodiment, the present invention can also be used in the output timing processing of signals for a variety of machines. For example, when a parts feeder is to be connected to a machine tool such as a drilling machine, a required signal can be obtained by making settings that output the pulse signal at the trailing edge of a signal which indicates that machining is in process. Furthermore, although a logic operation including two operations of logical addition and an operation of logical multiplication is described in the above embodiment, three or more fields for logical addition operation may be provided so as to carry out logical multiplication operation based on these results of logical addition. Furthermore, logic of negation of signal (signal inversion) may be added and, in this case, a NOT signal may be set in setting fields to carry out logic operation. Further, a display device on which signals for carrying out logic operation are displayed and set may be provided separate from a controller which carries out logic operation based on the signals set on the screen of the display. Such a display device may be arranged on a network.

## Claims

1. A machine signal processing device comprising a display device (6), an input device (7), and a controller (1) for controlling a machine (2), wherein
the display device (6) is arranged to display a predefined group of signals and a plurality of groups of signal setting fields (20f1, 20f2) for setting the output conditions of a selected signal, each of the groups comprising a plurality of signal setting fields for setting selected signals;
the input device (7) comprises means for selecting and setting a signal from among the predefined group of signals displayed on the display device (6) and means for setting an output destination of the result of logic operation; and
the controller (1) comprises logic operation execution means (1a) for performing logic operations, wherein
the logic operation execution means (1a) is arranged to carry out, based on the signals set in the signal setting fields, an operation of logical addition on the signals set in the signal setting fields of the same group,
if one or more signals are set in another group of signal setting fields, to carry out an operation of logical multiplication on the results of logical addition operation performed on the respective groups of signal setting fields (20f1, 20f2), and
to output the results of the logic operations to the set output destination.

2. The machine signal processing device according to claim 1, wherein the content of the logic operation displayed on the display device (6) is specified by the group of signal setting fields (20f1, 20f2) comprising a plurality of signal setting fields that allow the input device (7) to supply signal to the logic operation execution means (1a), and by the display positions of the signal setting fields where signal setting fields of the same group are arranged vertically while the groups of signal setting fields (20f1, 20f2) are arranged horizontally side-by-side.

3. The machine signal processing device according to claim 1, wherein the content of the logic operation displayed on the display device (6) is specified by the groups of signal setting fields (20f1, 20f2) comprising a plurality of signal setting fields that allow the input device (7) to supply signals to the logic operation execution means (1a), and a graphic display.

4. The machine signal processing device according to claim 2 or 3, wherein the content of the logic operation is such that an operation of logical addition is carried out on the signals set in the signal setting fields in the same group and an operation of logical multiplication is carried out on the results of logical addition operations carried out on the respective groups of signal setting fields (20f1, 20f2).

## Patentansprüche

1. Vorrichtung zur Maschinensignalverarbeitung, umfassend eine Anzeigevorrichtung (6), eine Eingabevorrichtung (7) und eine Steuerung (1) zum Steuern einer Maschine (2), wobei
die Anzeigevorrichtung (6) ausgelegt ist zum Anzeigen einer vorbestimmten Gruppe Signale und einer Mehrzahl Gruppen Signaleinstellungsfelder (20f1, 20f2) zum Einstellen der Ausgabebedingungen eines ausgewählten Signals, wobei jede der Gruppen eine Mehrzahl Signaleinstellungsfelder zum Einstellen ausgewählter Signale umfasst;
die Eingabevorrichtung (7) umfasst Mittel zum Auswählen und Einstellen eines Signals aus der vorbestimmten Gruppe Signale, die auf der Anzeigevorrichtung (6) angezeigt sind, und Mittel zum Einstellen eines Ausgabeziels des Ergebnisses einer logischen Operation; und
die Steuerung (1) umfasst Ausführungsmittel für logische Operationen (1a) zum Durchführen logischer Operationen, wobei
das Ausführungsmittel für logische Operationen (1a) ausgelegt ist zum Ausführen, auf der Basis der in den Signaleinstellungsfeldern eingestellten Signale, einer Operation von logischer Addition mit den in den Signaleinstellungsfeldern der gleichen Gruppe eingestellten Signalen,
sind ein oder mehrere Signale in einer anderen Gruppe Signaleinstellungsfelder eingestellt, zum Ausführen einer Operation von logischer Multiplikation mit den Ergebnissen der Operation logischer Addition, die mit den jeweiligen Gruppen Signaleinstellungsfelder (20f1, 20f2) ausgeführt wurde, und
zum Ausgeben der Ergebnisse der logischen Operationen zum eingestellten Ausgabeziel.

2. Vorrichtung zur Maschinensignalverarbeitung gemäß Anspruch 1, wobei der Inhalt der auf der Anzeigevorrichtung (6) angezeigten logischen Operation spezifiziert ist durch die Gruppe Signaleinstellungsfelder (20f1, 20f2), umfassend eine Mehrzahl Signaleinstellungsfelder, die ermöglichen, dass die Eingabevorrichtung (7) dem Ausführungsmittel für logische Operationen (1a) ein Signal bereitstellt, und durch die Anzeigepositionen der Signaleinstellungsfelder, wo Signaleinstellungsfelder der gleichen Gruppe senkrecht angeordnet sind, während die Gruppen Signaleinstellungsfelder (20f1, 20f2) waagerecht nebeneinander angeordnet sind.

3. Vorrichtung zur Maschinensignalverarbeitung gemäß Anspruch 1, wobei der Inhalt der auf der Anzeigevorrichtung (6) angezeigten logischen Operation spezifiziert ist durch die Gruppe Signaleinstellungsfelder (20f1, 20f2), umfassend eine Mehrzahl Signaleinstellungsfelder, die ermöglichen, dass die Eingabevorrichtung (7) dem Ausführungsmittel für logische Operationen (1a) Signale bereitstellt, und durch eine graphische Anzeige.

4. Vorrichtung zur Maschinensignalverarbeitung gemäß Anspruch 2 oder 3, wobei der Inhalt der logischen Operation so ist, dass eine Operation von logischer Addition ausgeführt wird mit den in den Signaleinstellungsfeldern in der gleichen Gruppe eingestellten Signalen und eine Operation von logischer Multiplikation ausgeführt wird mit den Ergebnissen von Operationen logischer Addition, ausgeführt mit den jeweiligen Gruppen Signaleinstellungsfelder (20f1, 20f2).

## Revendications

1. Un dispositif de traitement de signal de machine comprenant un dispositif d'affichage (6), un dispositif d'entrée (7) et un dispositif de commande (1) destinés à commander une machine (2), où
le dispositif d'affichage (6) est agencé de façon à afficher un groupe prédéfini de signaux et une pluralité de groupes de champs de réglage de signal (20f1, 20f2) pour le réglage des conditions de sortie d'un signal sélectionné, chacun des groupes comprenant une pluralité de champs de réglage de signal pour le réglage de signaux sélectionnés,
le dispositif d'entrée (7) comprend un moyen de sélection et de réglage d'un signal provenant du groupe prédéfini de signaux affichés sur le dispositif d'affichage (6), et un moyen de réglage d'une destination de sortie du résultat d'une opération logique, et
le dispositif de commande (1) comprend un moyen d'exécution d'une opération logique (1a) destiné à l'exécution d'opérations logiques, où
le moyen d'exécution d'une opération logique (1a) est agencé de façon à effectuer, en fonction des signaux définis dans les champs de réglage de signal, une opération d'addition logique sur les signaux définis dans les champs de réglage de signal du même groupe,
si un ou plusieurs signaux sont définis dans un autre groupe de champs de réglage de signal, de façon à effectuer une opération de multiplication logique sur les résultats d'une opération d'addition logique exécutée sur les groupes respectifs de champs de réglage de signal (20f1, 20f2), et
de façon à envoyer les résultats des opérations logiques à la destination de sortie définie.

2. Le dispositif de traitement de signal de machine selon la revendication 1, où le contenu de l'opération logique affichée sur le dispositif d'affichage (6) est spécifié par le groupe de champs de réglage de signal (20f1, 20f2) comprenant une pluralité de champs de réglage de signal qui permettent au dispositif d'entrée (7) de fournir un signal au moyen d'exécution d'une opération logique (1a), et par les positions d'affichage des champs de réglage de signal où les champs de réglage de signal du même groupe sont agencés verticalement tandis que les groupes de champs de réglage de signal (20f1, 20f2) sont agencés horizontalement côte à côte.

3. Le dispositif de traitement de signal de machine selon la revendication 1, où le contenu de l'opération logique affiché sur le dispositif d'affichage (6) est spécifié par le groupe de champs de réglage de signal (20f1, 20f2) comprenant une pluralité de champs de réglage de signal qui permettent au dispositif d'entrée (7) de fournir des signaux au moyen d'exécution d'une opération logique (1a), et un écran graphique.

4. Le dispositif de traitement de signal de machine selon la revendication 2 ou 3, où le contenu de l'opération logique est tel qu'une opération d'addition logique est effectuée sur les signaux définis dans les champs de réglage de signal dans le même groupe et une opération de multiplication logique est effectuée sur les résultats d'opérations d'addition logiques effectuées sur les groupes respectifs de champs de réglage de signal (20f1, 20f2).
